# EUROPÄISCHE PATENTSCHRIFT

(11) **EP 2 673 546 B1**
(45) Veröffentlichungstag und Bekanntmachung des Hinweises auf die Patenterteilung: **29.03.2017**
(21) Anmeldenummer: 11705161.5
(22) Anmeldetag: 12.02.2011
(51) Int. Cl.: F16L 55/13

(54) **VERSCHLUSSELEMENT FÜR INNENDRUCKBEAUFSCHLAGTE BOHRUNGEN VON BAUTEILEN**
CLOSURE ELEMENT FOR PRESSURIZED BORES
ÉLÉMENT D'OBTURATION POUR LES TROUS SOUS PRESSION

(43) Veröffentlichungstag der Anmeldung: 18.12.2013
(73) Patentinhaber: SFC KOENIG AG, 8953 Dietikon (CH)
(72) Erfinder: SEIFFERT, Pierre, CH-8962 Bergdietikon (CH); KRAUER, Jürg, CH-8610 Uster (CH)
(74) Vertreter: Luchs, Willi
(86) Internationale Anmeldenummer: PCT/EP2011/000663
(87) Internationale Veröffentlichungsnummer: WO 2012/107059

(56) Entgegenhaltungen:
- WO-A1-00/37844
- WO-A2-2009/056290
- AU-A- 2 113 683
- DE-A1- 1 955 005
- DE-U1- 7 828 248
- DE-U1- 20 202 963
- GB-A- 2 094 928
- US-A- 2 996 214
- US-A- 3 257 890
- US-A- 3 333 723
- US-A- 3 367 017
- US-A- 4 059 980
- US-A- 4 091 841
- US-A- 5 078 294
- US-A1- 2003 178 793

## Beschreibung

Die Erfindung betrifft ein Verschlusselement für innendruckbeaufschlagte Bohrungen von Bauteilen, mit einer in die Bohrung weitgehend spielfrei einsetzbaren Verschlussscheibe, die durch einen axial beaufschlagten Zug aufspreizbar ist und dabei radial gegen die Innenwand der zu verschliessenden Bohrung andrückbar ist. Die Erfindung betrifft auch ein Verfahren zum Einbau des Verschlusselements in die Bohrung des Bauteils.

Verschlusselemente dieser Art werden als Massenartikel in Bohrungen mit unterschiedlichen Durchmessern und Innendrücken eingesetzt. Je nach Grösse der Bohrung und Stärke des wirksamen Innendrucks ergeben sich mannigfaltige Ausführungen. Einige dieser Ausführungen sind in der DE AS 1 120 415 und der US 6,708,978 B2 geoffenbart. Die dort beschriebenen Verschlüsse sind als einteilige Verschlussscheiben ausgebildet. Sie sind somit fertigungstechnisch einfacher als mehrteilige Verschlüsse, wie beispielsweise der in der WO 2009/000317 A1 beschriebene Verschluss. Da aber die Verschlussscheiben verhältnismässig kleine Abmessungen aufweisen, sind sie oft umständlich handhabbar. Zudem muss die Verschlussscheibe während des Einbauvorgangs gegen eine innenliegende Gegenfläche der Bohrung abgestützt werden. Infolgedessen muss diese präzise abgestuft sein, um sicherzustellen, dass die Verschlussscheibe im eingebauten Zustand genau die vorgesehene Einbautiefe hat.

Gemäss der Druckschrift DE-A-19 55 005 ist ein Verfahren zum Verschliessen von Bohrungen erläutert, bei dem ein in der Bohrung radial dehnbares Element und zusätzlich ein Sprengelement als zusammengebaute Gruppe einsetzbar ist. Nachteilig ist dabei, dass sie aus einem Stift mit einem konischen Teil oder dergleichen und wenigstens einem separaten Sprengelement oder aus mehreren konischen Scheiben zusammengesetzt sind. Sie bestehen im Zustand nach der Montage stets wenigstens aus einem zentrisch angeordneten Stift und einer diesen umgebenden Sprenghülse oder gelochten Scheiben. Es sind somit stets zwei voneinander getrennte Elemente vorhanden.

Die DE-A-19 55 005 offenbart somit ein Verschlusselement für innendruckbeaufschlagte Bohrungen von Bauteilen, mit einer in die Bohrung weitgehend spielfrei einsetzbaren Verschlussscheibe, die durch einen axial beaufschlagten Zug unter Verwendung eines Gegenhalters einer Einbauvorrichtung aufspreizbar ist und dabei radial gegen die Innenwand der zu verschliessenden Bohrung andrückbar ist.

Gemäss GB-A-2 094 928 ist eine Verschlussvorrichtung für eine Passage vorgesehen, bei welcher eine Hülse durch einen topfförmigen Teil durch Ziehen eines durch die Hülse sich erstreckenden Bolzens an die Innenwandung dieser Passage gedrückt wird. Sobald sich dieser Teil annähernd innerhalb der Hülse befindet, wird der Bolzen bei der Sollbruchstelle abgebrochen.

Bei dem US-Patent Nr. 2,996,214 ist ein expandierbarer Verschluss geoffenbart, bei dem eine sphärisch gebildete Scheibe in ein zweites Element eingeschraubt ist und durch dieses Verschrauben und dem Halten der Scheibe mittels eines Werkzeuges die Scheibe nach aussen gedrückt wird. Es werden aber ebenso diese Scheibe sowie ein zweites Element benötigt.

Der Erfindung liegt die Aufgabe zugrunde, diese Nachteile zu vermeiden und ein Verschlusselement der eingangs genannten Art zu schaffen, das leicht in eine durchgehend glatte Bohrung einbaubar ist und sie mit einer definierten Schliesskraft sicher verschliesst.

Diese Aufgabe wird erfindungsgemäss nach den Merkmalen des Anspruchs 1 gelöst.

Der mit der Verschlussscheibe integrierte Zugstift erleichtert den Einbau des Verschlusses in die Bohrung des Bauteils. Durch die Zugbeaufschlagung des Stiftes entfällt auch die Abstützung der Verschlussscheibe gegen eine innenliegende Gegenfläche des Bauteils. Da der Zugeffekt durch die Sollbruchstelle begrenzt wird, ist ausserdem sichergestellt, dass im eingebauten Zustand die Bohrung mit einer definierten Schliesskraft verschlossen wird.

Der Einbau des Verschlusselements in die Bohrung des Bauteils wird erfindungsgemäss so durchgeführt, dass zunächst die Verschlussscheibe mit dem Zugstift eingeführt und dieser anschliessend mit einer ihn umgreifenden Klemmbacke abgezogen wird, wobei er die Verschlussscheibe in Zugrichtung gegen einen äusseren Gegenhalter andrückt, bis er an der Sollbruchstelle bei Erreichen einer bestimmten Zugspannung von der Verschlussscheibe abgetrennt wird.

Das erfindungsgemässe Verfahren ermöglicht den schnellen Einbau des Verschlusses mit einer einfach zu handhabenden Vorrichtung, bestehend im wesentlichen aus dem Klemmbackengehäuse mit den auf Zug beaufschlagbaren Klemmbacken und dem leicht austauschbaren Mundstück, welches als Gegenhalter wirkt.

Bevorzugte Ausgestaltungen des erfindungsgemässen Verschlusses sowie des Verfahrens zum Einbauen des Verschlusses bilden den Gegenstand der abhängigen Ansprüche.

Die Erfindung wird nachfolgend anhand von Ausführungsbeispielen unter Bezugnahme auf die schematisch dargestellten Zeichnung näher erläutert. Es zeigen:
- Fig.1: eine erste Ausführung des erfindungsgemässen Zugstiftes mit der dazugehörigen Einbauvorrichtung, in zwei Einbauphasen dargestellt,
- Fig. 2: verschiedene Ausführungen des Zugstiftes aus Fig. 1,
- Fig. 3: verschiedene Ausführungen der Mantelfläche des Zugstiftes aus Fig. 1,
- Fig. 4: verschiedene Ausführungen des Zugstiftes aus Fig. 1 mit einem stirnseitigen Aufsatz,
- Fig. 5: verschiedene Ausführungen der Verschlussscheibe aus Fig. 1,
- Fig. 6: verschiedene mehrteilige Ausführungen der Verschlussscheibe aus Fig. 1,
- Fig. 7: verschiedene Ausführungen der Dichtfläche der Verschlussscheibe aus Fig. 1,
- Fig. 8: verschiedene Ausführungen der Verschlussscheibe aus Fig. 1 mit bearbeiteten Dichträndern,
- Fig. 9: verschiedene Ausführungen der Verschlussscheibe aus Fig. 1 mit unterschiedlichen Geometrien der Dichtfläche,
- Fig. 10: verschiedene Ausführungen der Sollbruchstelle aus Fig. 1,
- Fig. 11: eine Ausführung der Sollbruchstelle für kegelförmige Zugstifte,
- Fig. 12: eine weitere Ausführung der Sollbruchstelle, die nicht zur Erfindung gehört,
- Fig. 13: eine erste Variante der Einbauvorrichtung aus Fig. 1 mit den Zugstift festgreifenden Klemmbacken,
- Fig. 14: eine zweite Variante der Einbauvorrichtung aus Fig. 1 mit einem Schneid- oder Prägewerkzeug zur Erzeugung der Sollbruchstelle,
- Fig. 15: eine dritte Variante der Einbauvorrichtung aus Fig. 1 mit in die Klemmbacken integriertem Schneid- oder Prägewerkzeug,
- Fig. 16: drei Varianten des Gegenhalters aus Fig. 1,
- Fig. 17: eine weitere Ausführung des Gegenhalters als Gewindeteil,
- Fig. 18: zwei Varianten des Zugstiftes aus Fig. 1 mit Tragelementen für eine Kraftfeder,
- Fig. 19: zwei weitere Varianten des Zugstiftes aus Fig. 1 mit Gewinden zum Anschrauben eines zusätzlichen Bauteils,
- Fig. 20: eine weitere Variante des Verschlusselementes als Halteelement ohne Sollbruchstelle ausgeführt, und
- Fig. 21: eine weitere Variante eines Verschlusselementes in perspektivischer Ansicht.

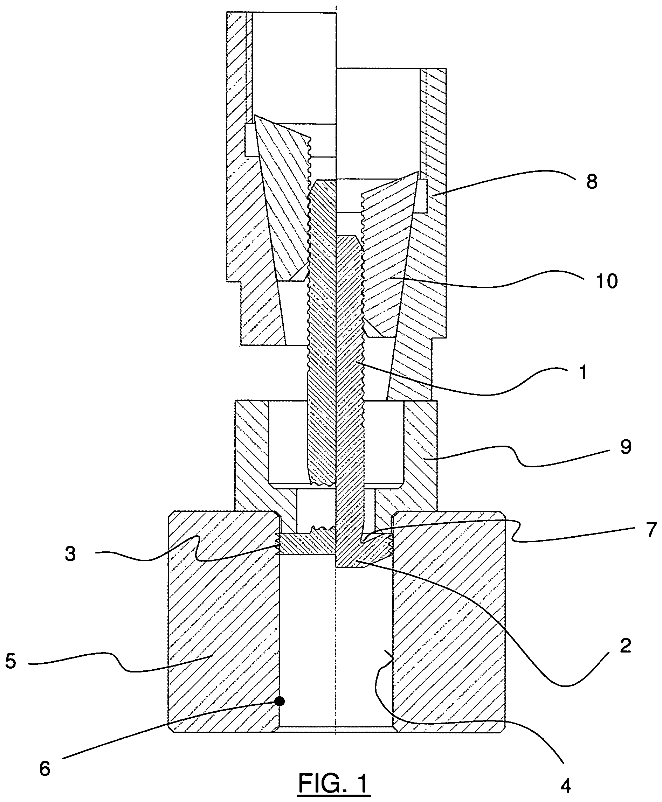

Das erfindungsgemässe Verschlusselement ist in Fig. 1 rechts in der Anfangsphase und links in der Endphase des Einbauvorganges veranschaulicht. Solche Verschlusselemente werden vornehmlich bei Automobil-, Pneumatik- und Hydraulikanwendungen, so zum Beispiel als Abdichtung von Bohrungen in Fahrzeugmotoren oder von Bohrungen in Hydraulik- bzw. Pneumatikventilen usw. eingesetzt.

Das Verschlusselement umfasst einen Zugstift 1 mit einem als Verschlussscheibe 2 ausgebildeten Kopfteil. Letzterer weist eine randseitige Dichtfläche 3 auf, deren Aussendurchmesser so bemessen ist, dass sie weitgehend spielfrei in die Bohrung 4 eines Bauteils 5 einführbar ist. Der gut handhabbare Zugstift 1 erleichtert den Einbau des Verschlusses in die Bohrung des Bauteils.

Wie aus Fig. 1 ersichtlich ist, wird die Verschlussscheibe 2 durch den auf Zug beaufschlagten Zugstift 1 aufgespreizt und mit ihrer Dichtfläche 3 radial gegen die Innenwand 6 der Bohrung 4 angedrückt, bis der Zugstift 1 bei Erreichen einer bestimmten Zugspannung an einer Sollbruchstelle 7 des Stiftes von der Verschlussscheibe 2 abgetrennt wird. Die Verschlussscheibe 2 ist dann in der Innenwand 6 der Bohrung 4 fest verankert und verschliesst sie mit einer abhängig von der Sollbruchspannung definierten Schliesskraft.

Das erfindungsgemässe Verschlusselement wird mit Hilfe einer Einbauvorrichtung eingebaut, die sich im wesentlichen aus Klemmbacken 10 mit einem Klemmbackengehäuse 8, einer nicht näher gezeigten Abziehvorrichtung sowie eines auf dem Bauteil 5 aufgesetzten Gegenhalters 9 zusammensetzt. Der Zugstift 1 wird mit den ihn umgreifenden Klemmba - ken 10 festgeklemmt. Der leicht austauschbare Gegenhalter 9 ist so gebaut, dass er mehr oder weniger tief in die Bohrung 4 des Baukörpers hineinragt. Dadurch kann die Einbautiefe des Verschlusses von Fall zu Fall festgelegt werden. Da der Zugstift 1 auf Zug beaufschlagt wird, ist der Gegenhalter 9 hinter der Verschlussscheibe 2 aufgestellt. Somit ist es möglich, die Bohrung 4 mit einer durchgehend glatten Innenfläche zu versehen.

Der Gegenhalter kann im Rahmen der Erfindung auch als eine in die Bohrung eingepresste Büchse ausgebildet sein, oder mittels einer Verengung der Bohrung gebildet werden.

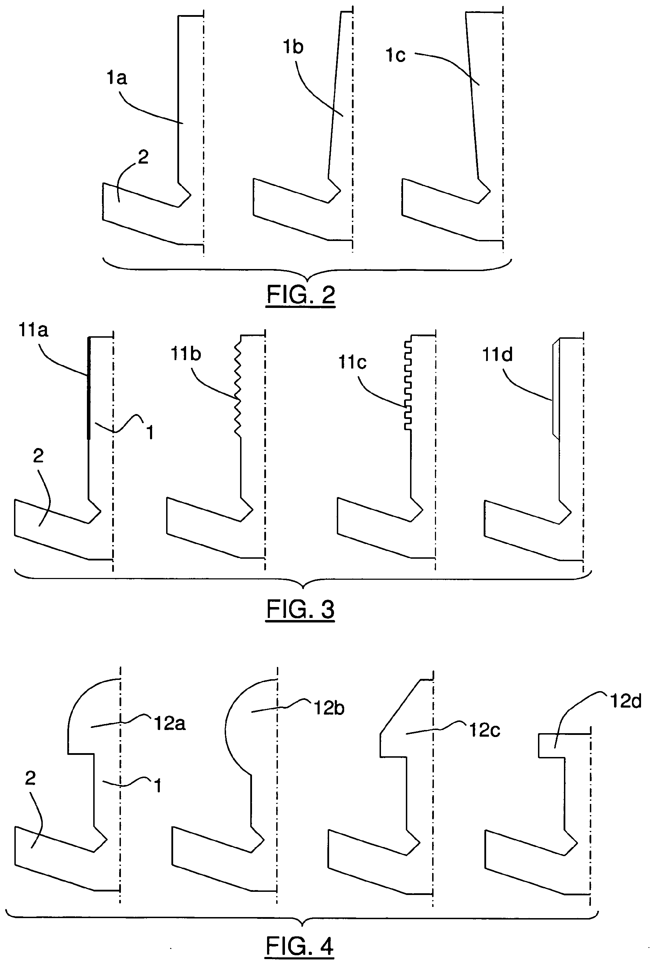

In Fig. 2 bis Fig. 20 sind weitere mögliche Ausführungsformen des erfindungsgemässen Verschlusselementes und der dazugehörigen Einbauvorrichtung dargestellt. In den Varianten 1a bis 1 c gemäss Fig. 2 ist der Zugstift zylindrisch oder kegelförmig ausgebildet, er kann ebenfalls prismatisch sein.

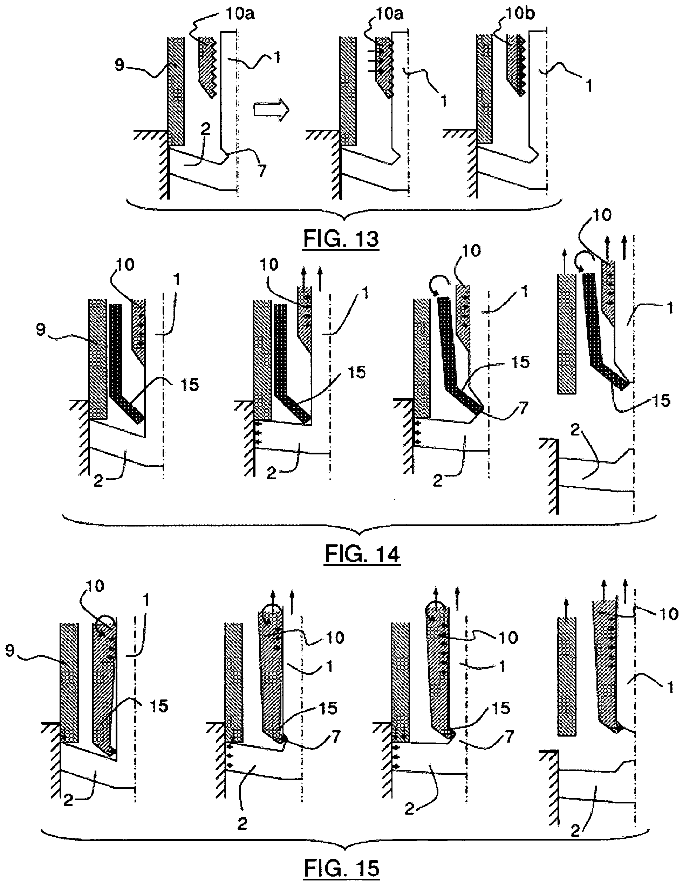

Wie aus Fig. 3 ersichtlich, kann der Zugstift zudem ganz oder teilweise eine aufgerauhte, gezackte, gerillte oder mit einem Gewinde versehene Mantelfläche 11a bis 11d aufweisen, an welche sich die Klemmbacken 10 form- oder kraftschlüssig festklemmen können. In den Varianten gemäss Fig. 13 erfolgt das Einbringen der Rillen bzw. Zacken durch die ein- oder mehrteilig ausgebildeten Klemmbacken 10a bzw. 10b des Mundstücks.

In Fällen, wo hohe Zugkräfte auf den Zugstift 1 wirksam sind, oder zwecks kürzerer Bauform ist es für eine sichere Mitnahme des Stiftes vorteilhaft, wenn er am von der Verschlussscheibe abgekehrten Ende mit einem Aufsatz 12a bis 12d gemäss Fig. 4 versehen ist.

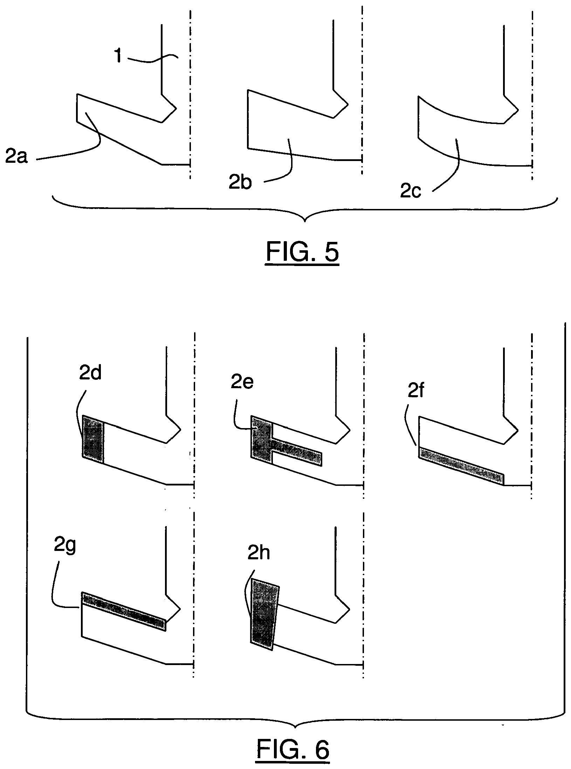

In den Varianten 2a bis 2c gemäss Fig. 5 ist die Verschlussscheibe 2 leicht kegel- oder kalottenförmig ausgebildet.

In den Varianten 2d bis 2h gemäss Fig. 6 ist die an sich einstückige Verschlussscheibe 2 mit Verstärkungsteilen ausgebildet.

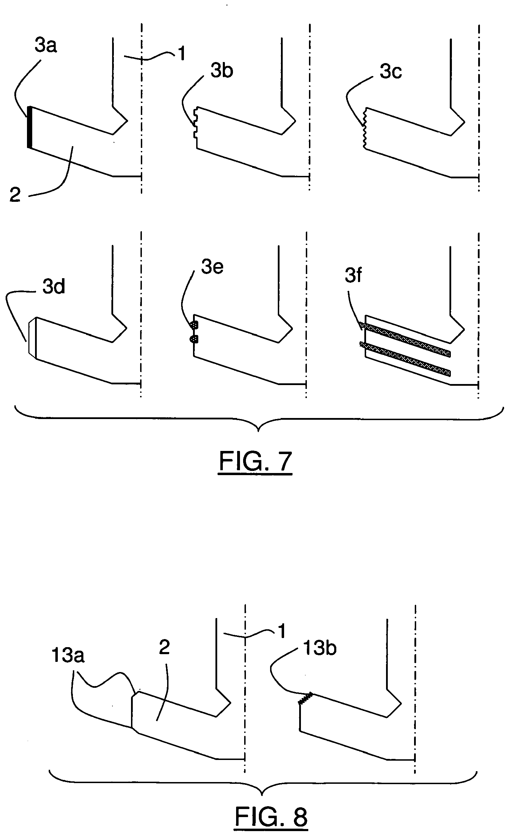

In der Variante gemäss Fig. 7 weist sie randseitig eine beschichtete, aufgeraute, gerillte, gezackte oder mit Gewinde oder einem Dichtungselement versehene Dichtfläche 3a bis 3f auf, welche eine feste Verankerung der Verschlussscheibe sicherstellt. Es ist auch in diesem Sinne vorteilhaft, wenn mindestens die aussenliegende Kante der Dichtfläche angefast und gegebenenfalls mit einer rutschfest bearbeiteten Oberfläche gemäss den Varianten 13a, 13b in Fig. 7 versehen ist. Die Dichtfläche 3 selbst ist vorzugsweise zylindrisch ausgebildet.

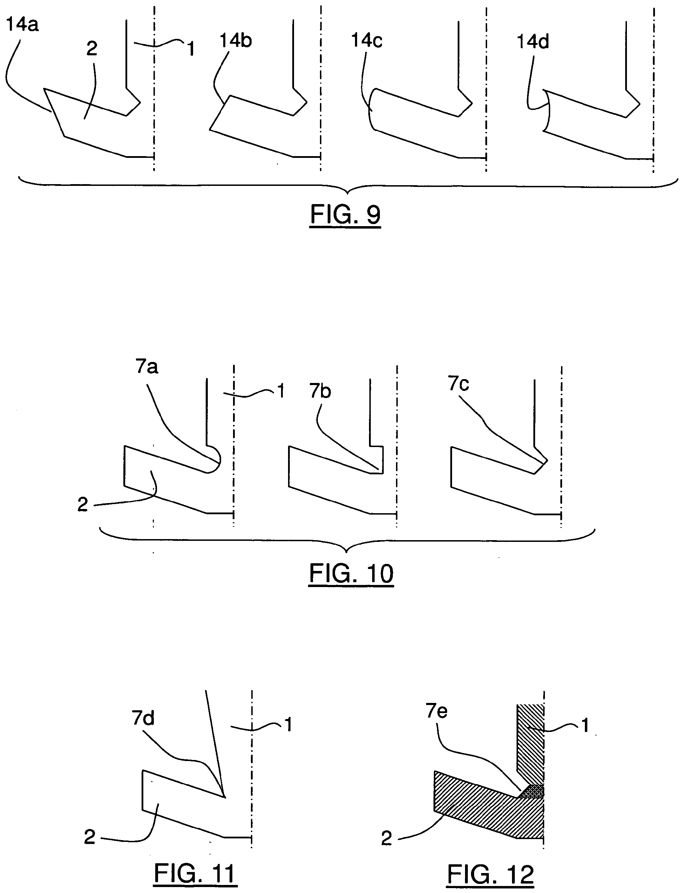

Gemäss den Varianten 14a bis 14d in Fig. 9 kann sie aber auch mit einer konischen bzw. konkaven oder konvexen Form versehen sein, dies zum Beispiel für den Einbau in von der zylindrischen Form abweichenden Bohrungen.

Die Sollbruchstelle 7 des Zugstiftes 1 ist in den Varianten 7a bis 7c gemäss Fig. 10 nut- oder kerbenförmig ausgebildet. Bei leicht kegelförmigen Zugstiften kann sie gemäss Fig. 11 durch deren an die Verschlussscheibe 2 stossende Kante 7d gebildet sein.

In der Variante gemäss Fig. 12 , die nicht zur Erfindung gehört, sind der Zugstift 1 und die Verschlussscheibe 2 als an der Sollbruchstelle 7e miteinander fest verbundene Einzelteile hergestellt.

In der Variante gemäss Fig. 14 wird die Sollbruchstelle 7 während des Einbauvorgangs mit einem im Klemmbackengehäuse 8 integrierten Schneid- oder Prägewerkzeug 15 eingebracht.

In der Variante nach Fig. 15 wird die Sollbruchstelle auch während des Einbauvorgangs eingebracht, wobei in diesem Fall das Schneid- oder Prägewerkzeug 15 an den Klemmbacken 10 integriert ist.

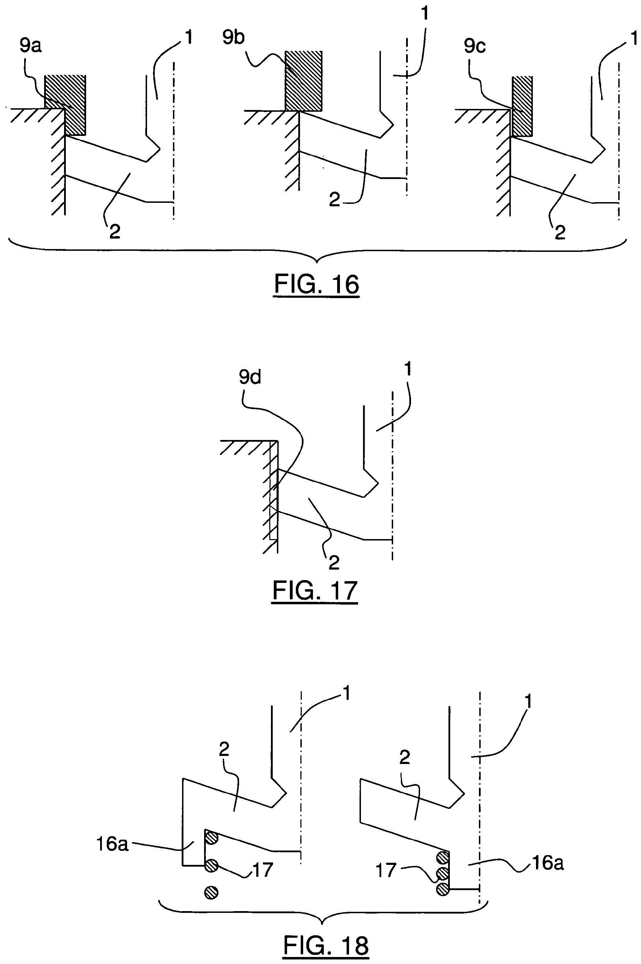

Wie in Fig. 16 gezeigt ist, kann der Gegenhalter gemäss der Variante 9a abgestuft sein, wobei die Einbautiefe der Verschlussscheibe 2 durch die Tiefe der Abstufung bestimmt wird. In der Variante 9b hat der Gegenhalter eine ebene Stutzfläche, und die Verschlussscheibe 2 liegt bündig mit der Aussenfläche des Bauteils. In der Variante 9c hat der Gegenhalter ungefähr den Durchmesser der Bohrung und die Verschlussscheibe kann in beliebiger Tiefe eingebaut werden.

In der Variante 9d gemäss Fig. 17 dient als Gegenhalter ein im Bauteil angeordnetes Gewinde, in welches die Verschlussscheibe 2 eingeschraubt wird. Das ermöglicht die stufenlose Einstellung der Einbautiefe des Verschlusses.

In den Varianten gemäss den Fig. 13 bis Fig. 15 ist der Gegenhalter 9 im Mundstück der Einbauvorrichtung integriert. Der Gegenhalter 9 könnte aber auch als Einzelteil ausgebildet sein.

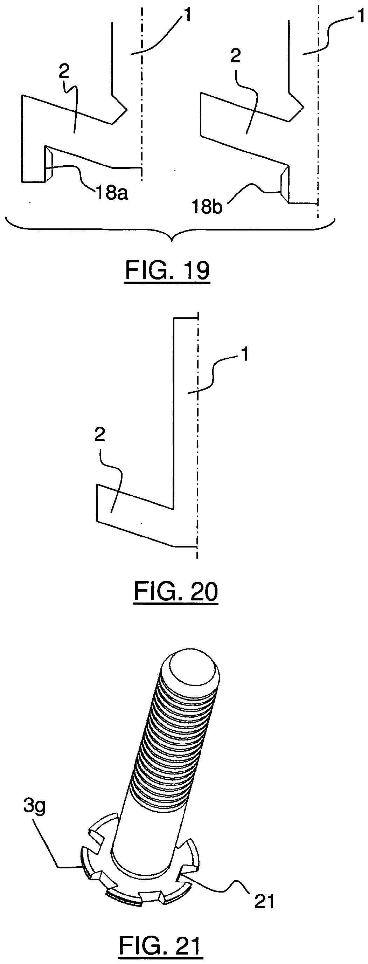

Das Verschlusselement kann auch als Halteelement ausgebildet sein. Mögliche Varianten sind in den Fig. 18 und Fig. 19 abgebildet.

In den Varianten gemäss Fig. 18 ist die Verschlussscheibe 2 unterseitig mit Haltemitteln 16a, 16b für eine Kraftfeder 17 ausgestattet.

In den Varianten gemäss Fig. 19 weist sie unterseitig ein Gewinde 18a, 18b auf, an dem ein weiteres Bauteil anschraubbar ist.

In der Variante gemäss Fig. 20 wird der Zugstift 1 von der Dichtscheibe 2 beim Einbau nicht abgerissen und kann beliebige Haltefunktionen erfüllen. Zum Beispiel könnte er auch mit einem Gewinde versehen sein.

Bei dem Verschlusselement nach Fig. 21 sind eine oder - wie dargestellt - mehrere Öffnungen 21 bei der Verschlussscheibe mit einer Dichtfläche 3g vorgesehen. Ein solches Verschlusselement könnte in einer Bohrung bei einem Ventil oder so ähnlich Verwendung finden, bei dem das Verschlusselement zwar ein Medium durchlässt, aber beispielsweise ein in der Bohrung verschiebbares Ventilteil zurückhält.

Das erfindungsgemässe Verschlusselement kann entweder aus Metall, insbesondere Aluminium oder rostfreiem Stahl, oder aus Kunststoff hergestellt sein, wobei als Herstellungsverfahren spanabhebende Verfahren, Kalt- oder Warmumformungsverfahren sowie Spritzgussverfahren in Betracht kommen.

## Patentansprüche

1. Verschlusselement für innendruckbeaufschlagte Bohrungen von Bauteilen, mit einer in die Bohrung (4) weitgehend spielfrei einsetzbaren Verschlussscheibe (2), die durch einen axial beaufschlagten Zug unter Verwendung eines Gegenhalters (9) einer Einbauvorrichtung aufspreizbar ist und dabei radial gegen die Innenwand (6) der zu verschliessenden Bohrung (4) andrückbar ist, wobei die Verschlussscheibe (2) als Kopfteil eines auf Zug beaufschlagbaren Zugstiftes (1) ausgebildet ist, welche einstückig aus einem Material hergestellt sind, und wobei die Verschlussscheibe (2) derart radial gegen die Innenwand (6) der Bohrung (4) andrückbar ist, bis sie ohne Verbindung mit dem Gegenhalter (9) der Einbauvorrichtung in der Bohrung (4) fest verankert ist, wobei die Verschlussscheibe (2) durch den auf Zug beaufschlagten Zugstift (1) aufspreizbar ist, bis der Zugstift (1) bei Erreichen einer bestimmten Zugspannung an einer Sollbruchstelle (7) des Zugstiftes von der Verschlussscheibe (2) abgetrennt ist.

2. Verschlusselement nach Anspruch 1, **dadurch gekennzeichnet, dass** der Zugstift (1) mit einer mindestens teilweise chemisch oder mechanisch bearbeiteten, zum Beispiel aufgerauhten, gezackten, gerillten oder mit einem Gewinde versehenen Umfangsfläche (11a bis 11 d) versehen ist.

3. Verschlusselement nach Anspruch 1, **dadurch gekennzeichnet, dass** der Zugstift (1) am von der Verschlussscheibe (2) abgekehrten Ende mit einem Aufsatz (12a bis 12d) zum Abziehen des Stiftes versehen ist.

4. Verschlusselement nach einem der vorangehenden Ansprüche 1 bis 3, **dadurch gekennzeichnet, dass** die Verschlussscheibe (2a bis 2c) leicht kegel- oder kalottenförmig ausgebildet ist.

5. Verschlusselement nach einem der vorangehenden Ansprüche 1 bis 4, **dadurch gekennzeichnet, dass** die Verschlussscheibe (2) randseitig eine beschichtete, aufgeraute, gerillte, gezackte oder mit Gewinde oder einem Dichtungselement versehene Dichtfläche (3a bis 3f) aufweist.

6. Verschlusselement nach einem der vorangehenden Ansprüche 1 bis 3, **dadurch gekennzeichnet, dass** mindestens die aussenliegende Kante der Dichtfläche (13a und 13b) angefast und gegebenenfalls mit einer rutschfest behafteten Oberfläche versehen ist.

7. Verschlusselement nach einem der vorangehenden Ansprüche 1 bis 3, **dadurch gekennzeichnet, dass** die Verschlussscheibe (2) randseitig mit einer konischen, konkaven oder konvexen Dichtfläche (14a bis 14d) versehen ist.

8. Verschlusselement nach einem der vorangehenden Ansprüche 1 bis 7, **dadurch gekennzeichnet, dass** die Sollbruchstelle (7a bis 7c) nut- oder kerbenförmig ausgebildet ist.

9. Verschlusselement nach Anspruch 1, **dadurch gekennzeichnet, dass** der Zugstift (1) leicht kegelförmig ist und die Sollbruchstelle durch seine an die Verschlussscheibe (2) stossende Stirnkante (7d) gebildet ist.

10. Verschlusselement nach einem der vorangehenden Ansprüche 1 bis 9, **dadurch gekennzeichnet, dass** der Zugstift (1a bis 1 c) eine zylindrische oder leicht kegelförmige Umfangsfläche aufweist.

11. Verfahren zum Einbauen des Verschlusselementes nach einem der vorangehenden Ansprüche 1 bis 10 in das dafür vorgesehene Bauteil, wobei die Verschlussscheibe (2) mit dem Zugstift (1) in die Bohrung (4) des Bauteils eingeführt und anschliessend der Zugstift (1) mit einem ihn umgreifenden Mundstück (8) abgezogen wird, **dadurch gekennzeichnet, dass**
dieser Zugstift (1) die Verschlussscheibe (2) in Zugrichtung gegen einen äusseren Gegenhalter (9) andrückt, bis er bei Erreichen einer bestimmten Zugspannung an der Sollbruchstelle (7) von der Verschlussscheibe (2) abgetrennt wird und diese Verschlussscheibe ohne Verbindung mit dem Gegenhalter (9) in der Bohrung (4) fest verankert ist.

12. Verfahren nach Anspruch 11, **dadurch gekennzeichnet, dass** die Sollbruchstelle (7) während des Abziehvorganges hergestellt wird.

## Claims

1. Closure element for internally pressurised bores in components, comprising a closure disc (2) that can be inserted into the bore (4) largely without any play and which can be spread apart by an axially applied tension by using a counter-holder (9) of an installation device and can thereby be pressed radially against the inner wall (6) of the bore (4) to be closed, whereby the closure disc (2) is in the form of a head part of a tensioning pin (1) which can be tensioned, which are manufactured as one-piece from one material, and whereby the closure disc (2) is pressable radially against the inner wall (6) of the bore (4) such that it is fix anchored in the bore (4) without any connection with the counter-holder (9) of the installation device, whereby closure disc (2) is spreadable apart by the applied tension of the tensioning pin (1), until the tensioning pin (1) is separated from the closure disc (2) upon reaching a specific tensile stress at a predetermined breaking point (7) of the tensioning pin (1).

2. Closure element according to Claim 1, **characterised in that** the tensioning pin (1) is provided with a peripheral surface (11 a to 11 d) that has been at least partially chemically or mechanically processed, for example roughened, serrated, fluted or provided with a thread.

3. Closure element according to Claim 1, **characterised in that** the tensioning pin (1) is provided on the end turned away from the closure disc (2) with an extension (12a to 12d) for withdrawing the pin.

4. Closure element according to any of the preceding Claims 1 to 3, **characterised in that** the closure disc (2a to 2c) is slightly conical or spherical in shape.

5. Closure element according to any of the preceding Claims 1 to 4, **characterised in that** the closure disc (2) has on the edge side a coated, roughened, fluted, serrated or with a thread or a sealing element provided sealing surface (3a to 3f).

6. Closure element according to any of the preceding Claims 1 to 3, **characterised in that** at least the edge lying on the outside of the sealing surface (13a and 13b) is bevelled and is optionally provided with an anti-slip surface.

7. Closure element according to any of the preceding Claims 1 to 3, **characterised in that** the closure disc (2) is provided on the edge side with a conical, concave or convex sealing surface (14a to 14d).

8. Closure element according to any of the preceding Claims 1 to 7 **characterised in that** the predetermined breaking point (7a to 7c) is in the form of a groove or a notch.

9. Closure element according to Claim 1, **characterised in that** the tensioning pin (1) is slightly conical and the predetermined breaking point is formed by its face edge (7d) abutting against the closure disc (2).

10. Closure element according to any of the preceding Claims 1 to 9, **characterised in that** the tensioning pin (1 a to 1 c) is provided with a cylindrical or slightly conical surface.

11. Method for installing the closure element according to any of the preceding Claims 1 to 10 in the component provided for this purpose, whereby the closure disc (2) with the tensioning pin (1) is introduced into the bore (4) of the component and then the tensioning pin (1) is withdrawn with a mouth piece (8) encompassing the latter, **characterised in that**
the tensioning pin (1) pressing the closure disc (2) in the tensile direction against an outer counter-holder (9) until it is separated from the closure disc (2) upon reaching a specific tensile stress at the predetermined breaking point (7) and this closure disc is fix anchored in the bore (4) without any connection with the counter-holder (9) .

12. Method according to Claim 11, **characterised in that** the predetermined breaking point (7) is produced during the withdrawal process.

## Revendications

1. Elément d'obturation de trous de pièces soumis à une pression intérieure comprenant un disque (2) d'obturation, qui peut être inséré dans une grande mesure sans jeu dans le trou (4), qui peut, par une traction appliquée axialement, être expansé en utilisant un mandrin (9) d'un dispositif de montage et ainsi être appliqué radialement sur la paroi (6) intérieure du trou (4) à obturer, le disque (2) d'obturation étant constitué sous la forme d'une partie de tête d'une tige (1) de traction, qui peut être soumise à une traction, lesquels sont fabriqués en un matériau en une seule pièce, et dans lequel le disque (2) d'obturation peut être appliqué radialement sur la paroi (6) intérieure du trou (4) jusqu'à s'ancrer fixement dans le trou (4), sans liaison avec le mandrin (9) du dispositif de montage, le disque (2) d'obturation pouvant être expansé par la tige (1) de traction soumise à une traction, jusqu'à ce que la tige (1) de traction soit, lorsque est atteinte une contrainte de traction déterminée, séparée du disque (2) d'obturation en un point (7) destiné à se rompre de la tige de traction.

2. Elément d'obturation suivant la revendication 1, **caractérisé en ce que** la tige (1) de traction est pourvue d'une surface (11a à 11d) périphérique, traitée au moins en partie chimiquement ou mécaniquement, en étant par exemple rendue rugueuse, crénelée, striée ou pourvue d'un filetage.

3. Elément d'obturation suivant la revendication 1, **caractérisé en ce que** la tige (1) de traction est, à l'extrémité éloignée du disque (2) d'obturation, pourvue d'une couronne (12a à 12d) pour tirer la tige.

4. Elément d'obturation suivant l'une des revendications précédentes 1 à 3, **caractérisé en ce que** le disque (2a à 2c) d'obturation est légèrement conique ou en forme de calotte.

5. Elément d'obturation suivant l'une des revendications 1 à 4, **caractérisé en ce que** le disque (2) d'obturation a, du côté du bord, une surface (3a à 3f) d'étanchéité revêtue, rendue rugueuse, nervurée, striée ou pourvue d'un filetage ou d'un élément d'étanchéité.

6. Elément d'obturation suivant l'une des revendications précédentes 1 à 3, **caractérisé en ce qu'**au moins le bord extérieur de la surface (13a et 13b) d'étanchéité est biseauté et, le cas échéant, est pourvu d'une surface anti-glissante.

7. Elément d'obturation suivant l'une des revendications précédentes 1 à 3, **caractérisé en ce que** le disque (2) d'obturation est pourvu, du côté du bord, d'une surface (14a à 14d) d'étanchéité conique, concave ou convexe.

8. Elément d'obturation suivant l'une des revendications précédentes 1 à 7, **caractérisé en ce que** le point (7a à 7c) destiné à se rompre est constitué sous la forme d'une rainure ou d'une entaille.

9. Elément d'obturation suivant la revendication 1, **caractérisé en ce que** la tige (1) de traction est légèrement conique et le point destiné à se rompre est formé par un bord (7d) frontal heurtant le disque (2) d'obturation.

10. Eléments d'obturation suivant l'une des revendications précédentes 1 à 9, **caractérisé en ce que** la tige (1a à 1c) de traction a une surface périphérique cylindrique ou légèrement conique.

11. Procédé de montage de l'élément d'obturation suivant l'une des revendications précédentes 1 à 10, dans la pièce prévue à cet effet, dans lequel on introduit le disque (2) d'obturation par la tige (1) de traction dans le trou (4) de la pièce et ensuite, on tire la tige (1) de traction par un embout (8) qui l'entoure, **caractérisé en ce que**
cette tige de traction pousse le disque (2) d'obturation dans le sens de traction sur un mandrin (9) extérieur, jusqu'à ce qu'elle soit, lorsque est atteinte une contrainte de traction déterminée, séparée du disque (2) d'obturation au point (7) destiné à se rompre et que ce disque d'obturation soit ancré fixement dans le trou (4) sans liaison avec le mandrin (9).

12. Procédé suivant la revendication 11, **caractérisé en ce que** l'on produit le point (7) destiné à se rompre pendant l'opération de traction.
